# EUROPEAN PATENT SPECIFICATION

(11) **EP 2 449 315 B1**
(45) Date of publication and mention of the grant of the patent: **04.12.2019**
(21) Application number: 10794277.3
(22) Date of filing: 10.02.2010
(51) Int. Cl.: F24F 7/08, F24F 11/00, F24F 12/00, F24F 11/77, F24F 110/40

(54) **VENTILATION SYSTEM**
BELÜFTUNGSSYSTEM
SYSTÈME DE VENTILATION

(30) Priority: 01.07.2009 KR 20090059916
(43) Date of publication of application: 09.05.2012
(73) Proprietor: LG Electronics Inc., Seoul 150-721 (KR)
(72) Inventor: LEE, Woo-Ram, Seoul 153-802 (KR); KIM, Ki-Dong, Seoul 153-802 (KR); LEE, Chung-Keun, Gwacheon-si Gyeonggi-do 301-348 (KR); HAN, Sung-Won, Seoul 153-802 (KR); HWANG, Dong-Kyu, Seoul 137-072 (KR); KIM, Kyung-Hwan, Seoul 153-802 (KR)
(74) Representative: Vossius & Partner Patentanwälte Rechtsanwälte mbB
(86) International application number: PCT/KR2010/000811
(87) International publication number: WO 2011/002142

(56) References cited:
- DE-A1- 2 748 772
- DE-A1- 10 139 927
- DE-A1- 10 240 745
- KR-B1- 100 719 858
- KR-Y1- 200 372 149
- US-B1- 6 378 317

## Description

### Technical Field

The present invention relates to a ventilation system.

### Background Art

Where as high-rise buildings that are recently built are designed not to open wide the windows, they are equipped with a ventilation system for ventilating the air inside.

The ventilation system is largely classified into a decentralized ventilation system and a central ventilation system. In detail, the decentralized ventilation system is a system in which a ventilator is installed in individual homes to be directly supply the external air and directly discharge the internal air to the outside, in the homes. Further, the central ventilation system is a system in a ventilator is installed at each floor or a predetermined position in a building, not in individual homes, to supply the external air to each home through a center duct connected with the ventilator and discharge the internal air of each home to the outside through the center duct and the ventilator.

US 6 378 317 discloses a ventilation system upon which the preamble of appending claim 1 is based.

### Disclosure of Invention

### Technical Problem

However, the related art described above has the following problems.

The ventilation performance of the decentralized ventilation system is deteriorated in accordance with external conditions. An object of the ventilator is to supply constant air flow set by a user to a home. On the other hand, as the height increases, the wind velocity gradually increases with reduction of frictional effect, such that stronger wind blows at the upper portion than the lower portion of a building. That is, external air is introduced at large pressure in the ventilator, such that it is difficult to supply constant air flow. Further, the ventilation performance is also deteriorated in accordance with changes in direction of wind around the ventilator. For example, when wind does not blow around the ventilator, it needs to operate a fan at high speed to supply the air flow set by a user, thereby causing unnecessary energy loss. As a result, the decentralized ventilation system has a problem that it is considerably affected by changes in the environment outside a building, because it operates while being directly exposed to the external air.

Further, in the central ventilation system, since the ventilator provided at the center has to cope with ventilation load for each floor or throughout a building, there is a problem that large area and volume are required for devices and the system configuration. Further, the more the number of floors, the longer the flow channel of air discharged from the ventilator becomes, such that static pressure loss is generated by friction of the flow channel. Therefore, there is a problem that it is difficult to supply sufficient air flow to the homes at the high floors of the building. More central ventilation fans are operated to complement the problem, but in this case, there is a problem that air flow is excessively supplied to the homes at the lower floors. Further, it is difficult to supply sufficient air flow to the homes at the high floors, when the homes at the low floors consume large air flow. That is, there is a problem that it is difficult to supply equal air flow to all the homes.

In order to overcome the problems described above, it is an object of the present invention to provide a ventilation system that can supply constant air flow to each floor or home of a high-rise building, regardless of changes in environment outside the building.

Further, it is another object of the present invention to provide a ventilation system that makes it possible to reduce power consumption.

### Solution to Problem

In order to accomplish the objects of the present invention, a ventilation system for a high-rise building according to the present invention includes: one or more ventilators which are provided for each floor within a building;a supply duct connected to the ventilator to introduce external air;an exhaust duct connected to the ventilator to exhaust internal air;a center duct which is provided in the building and longitudinally extends through a plurality of floors; and a blowing unit that is provided at one side of the center duct and forcibly blows the air in the center duct, wherein the supply duct is connected to the center duct and the exhaust duct extends outside the building through the outer wall of the building,wherein one side of the exhaust duct is exposed to the outside of the building through the outer wall and an end of said one side is covered by an exhaust cap, wherein the exhaust cap allows the internal air to flow outside while preventing foreign substances from flowing inside, wherein the center duct is provided with at least one pressure sensor, and the blowing unit is configured to adjust the amount of air flowing inside the center duct on the basis of the value measured by the pressure sensor.

The dependent claims forming alternative embodiments to the invention.

### Advantageous Effects of Invention

According to a ventilation system of an embodiment of the present invention described above, it is possible to supply constant air flow to each floor or home, regardless of changes in environment outside a building, by connecting a ventilator to a center duct that sucks external air and supplies it to each floor or home, or sucks internal air of each floor of home and discharges it to the outside the building.

Further, it is possible to reduce power consumption for operating the ventilation system, by detecting the pressure in the center duce and controls the operation of the center ventilation fan on the basis of the detected pressure.

### Brief Description of Drawings

FIG. 1 is a view illustrating the schematic configuration of a ventilation system according to a first embodiment of the present invention.
FIG. 2 is a view illustrating connection between the ventilator and the center duct of FIG. 1.
FIG. 3 is a view showing a blowing unit that sucks external air that is supplied to the center duct of FIG. 1.
FIG. 4 is a view illustrating the schematic configuration of a ventilation system according to an embodiment not falling under the scope of the present invention.

### Mode for the Invention

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the invention. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

Detailed embodiments for implementing the present invention is described hereafter in detail with the accompanying drawings.

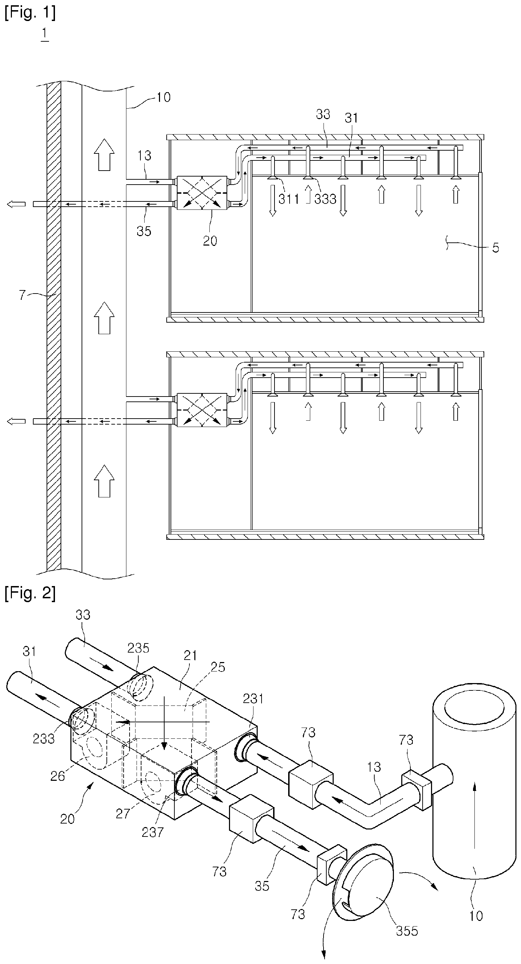

FIG. 1 is a view illustrating the schematic configuration of a ventilation system according to a first embodiment of the present invention.

Referring to FIG. 1, a ventilation system according to a first embodiment of the present invention is a ventilation system that is applied to a building having a plurality of floors. There may be at least one home 5 on each floor. The present invention exemplifies when there is one home 5 on each floor.

A ventilator 20 that supplies the external air into each of the homes 5 is provided at one side of the homes 5. In detail, a discharge duct 31 that guides the external air into the home 5 and an intake duct 33 that guides the internal air of the home 5 to the ventilator 20 are connected to the ventilator 20. The discharge duct 31 includes external air outlets 311 that are connected to several positions in the home 5 and exposed inside the home 5 to discharge the external air into the home 5. Further, the intake duct 33 also includes internal air inlets 333 that extend to several positions in the home 5 and suck the air inside the home 5.

The ventilator 20 is connected to a center duct 10 that is disposed through a plurality of floors of the building 1. For example, the center duct 10 may be formed to extend in the up-down direction through a plurality of floors at the center of the building 1, or may extends from the lowermost floor to the uppermost floor of the building 1. In the present embodiment, it is exemplified when the center duct 10 extends from the lowermost floor to the uppermost floor of the building 1.

A blowing unit 15 that sucks the external air outside the building 1 is connected to a side of the center duct 10, which is described below. The external air sucked by the blowing unit 15 flows from the lowermost floor to the uppermost floor of the building 1 through the center duct 10. Further, the center duct 10 and the ventilator 20 are connected by an supply duct 13. The supply duct 13 may be formed to diverge from the center duct 10. That is, the supply duct 13 guides the external air flowing through the center duct 10 to the ventilator 20.

Further, an exhaust duct 35 through which the internal air sucked from the inside of the home 5 is discharged outside the building 1 is connected to the ventilator 20. The exhaust duct 35 may be formed to be exposed to the outside, through the outer wall 7 of the building 1.

The ventilator 20 and the ducts 13, 31, 33, and 35 may be formed in the same structure for all the houses.

FIG. 2 is a view illustrating connection between the ventilator and the center duct of FIG. 1.

Referring to FIG. 2, the ventilator 20 may include a case 21 having inlets 231 and 235 and outlets 233 and 237, a heat exchange element 25 provided in the case 21, and an air supply blowing unit (26) and an exhaust blowing unit (27) that are disposed in the case 21 and forcibly blow air.

In detail, the supply duct 13 is connected to an air supply inlet 231 formed at the front of the case 21 and the discharge duct 31 is connected to an air supply outlet 233 formed at the rear of the case 21. Further, the intake duct 33 is connected to an air exhaust inlet 235 formed at the rear of the case 21 and the exhaust duct 35 is connected to an air exhaust outlet 237 formed at the front of the case 21.

In this configuration, the inlets 231 and 235 and the outlets 233 and 237 may be formed such that the external air and the internal air that flow into the ventilator 20 pass the heat exchange element 25 across each other. That is, the air exhaust inlet 235 may be formed at the opposite side of the air supply inlet 231 and the air supply outlet 233 may be formed at the opposite side of the air exhaust outlet 237. Further, the air supply blowing unit is connected with the air supply outlet 233 or the air supply inlet 231 such that the external air forcibly flows inside, and the exhaust blowing unit is connected with the air exhaust outlet 237 or the air exhaust inlet 235 such that the internal air is forcibly discharged outside.

Further, a fixing member 73 that stably fixes the supply duct 13 and the exhaust duct 35 to the inner wall of the building 1 may be provided for the supply duct 13 and the exhaust duct 35. That is, a portion of each of the supply duct 13 and the exhaust duct 35 may pass through the inner wall of the building 1. In addition, one side of the exhaust duct 35 is exposed to the outside of the building 1 through the outer wall 7 and the end of the side is covered by an exhaust cap 355 that allows the internal air to flow outside while preventing foreign substances from flowing inside.

The heat exchange element 25 is composed of a pleated plate where the internal air of the external air selectively passes and a plurality of heat exchange plates that is stacked to alternately cross each other and attached to the upper and lower portions of the pleated plate. The pleated plates are provided to allow air to flow in only one direction and stacked to cross each other. Therefore, the internal air and the external air can pass through the heat exchange element 25 without being mixed with each other. Further, a filter (not shown) that removes foreign substances in the air may be attached to the side close to the intakes 231 and 235 of the heat exchange element 25.

Heat is exchanged through the heat exchange plates while the internal air and the external air pass across each other through the heat exchange element 25, such that the inside temperature does not rapidly increase or decrease.

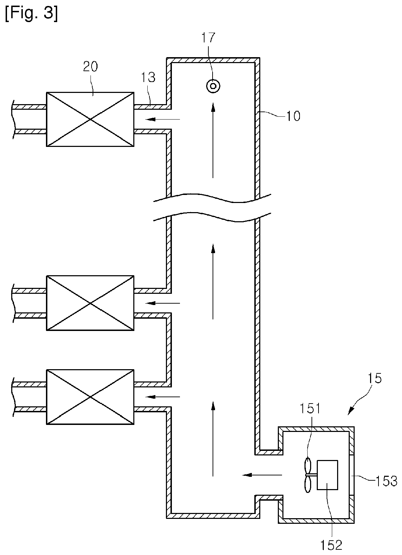

FIG. 3 is a view showing a blowing unit that sucks external air that is supplied to the center duct of FIG. 1.

Referring to FIG. 3, the blowing unit 15 that sucks the air outside the building is connected to a side of the center duct 10. That is, the blowing unit 15 functions as an intake unit. For example, the blowing unit 15 may be connected to the lower end of the center duct 10. In this case, since the blowing unit is disposed close to the ground where changes of wind are relatively small, it is possible to stably suck air and supply into the center duct 10.

In detail, the blowing unit 15 is disposed such that a portion is exposed to the outside to suck the air outside the building 1, and a ventilation hole 153 is formed at the exposed portion to suck the external air. Further, a fan 151 that blows the sucked external air to the inside of the center duct 10 and a motor 152 that rotates the fan 151 are provided in the blowing unit 15. The fan 151 and the motor 152 are designed to be enough to suck large amount of air to use to ventilate the entire building 1.

Further, at least pressure sensor 17 may be provided in the center duct 10. The pressure sensor 17 may be disposed at a predetermined height and the set pressure may be set in advance in accordance with the height. For example, the pressure sensor 17 may be disposed at the height corresponding to the ventilator disposed at the upper end portion of the building. The pressure sensor 17 measures the inside pressure of the center duct 10 and transmits it to a control unit (not shown).

The control unit controls the motor 152 on the basis of the value measured by the pressure sensor 17. In detail, when the value measured by the pressure sensor 17 is smaller than the set value, the number of revolution of the motor 152 is increased to supply more amount of air into the center duct 10. In detail, when the value measured by the pressure sensor 17 is larger than the set value, the number of revolution of the motor 152 is decreased to supply less amount of air into the center duct 10.

Hereafter, the operation and effect of the ventilation system having the above configuration according to an embodiment of the present invention is described.

The blowing unit 15 sucks and blows the external air to the center duct 10. The blowing unit 15 may be disposed at the lower end portion of the building where the wind velocity is low and the wind relatively little changes. That is, it can be disposed where there is little change in the external environment. Therefore, it is possible to more stably and uniformly suck the external air. Further, the fan 151 and the motor 152 are designed to suck large amount of air, it is less sensitive the conditions of the external air as compared with when a ventilator in decentralized ventilation systems of the related art directly sucks the external air.

The air blown into the center duct 10 flows upward through the duct and is supplied to the ventilator 20 through the supply duct 13. The external air supplied in the ventilator 20 exchanges heat with the internal air while passing through the heat exchange element 25, and then is supplied to the inside of the home 5 through the discharge duct 31. That is, since the air that is supplied to the ventilator 20 is the air flowing through the center duct 10, influence of the external environment is minimized and air in a predetermined condition can be supplied to the ventilator 20. Therefore, the ventilator 20 can uniformly and stably supply a predetermined amount of air set by a user.

The air supplied in the home 5 flows inside the ventilator 20 through the intake duct 33 while circulating inside the home 5, exchanges heat with the internal air while passing through the heat exchange element 25, and then is discharged outside through the exhaust duct 35. The air inside the home 5 is directly discharged outside the building by the above structure. Therefore, it is possible to save a space for an exhaust center duct for discharging the internal air in the building, in central ventilation systems of the related art.

Further, the pressure sensor 17 disposed in the center duct 10 allows constant air flow to be supplied to each home. In detail, a set pressure value needed where the pressure sensor 17 is positioned to supply constant air flow to each home 5 is stored in a memory (not shown) and the control unit controls the motor 152 in accordance with the value detected by the pressure sensor 17.

In particular, when the pressure sensor 17 is disposed at the upper end portion of the center duct 10, for example, a pressure range needed for providing a stable amount of air to the high floors of the building 1 can be stored in the memory. When the value detected by the pressure sensor 17 is smaller than the minimum value of the pressure range, the control unit increase the number of revolution of the motor 152, and when the value detected by the pressure sensor 17 is larger than the maximum value of the pressure range, it decreases the number of revolution of the motor 152. Therefore, it is possible to supply a stable amount of air to the uppermost floor, even if energy loss is generated while the external air passes through the center duct 10 or the homes at the low floors consume a large amount of air.

In the mean time, the change of indoor circumstance besides that of outdoor circumstance may be a factor that intrrupts supplying a constant amount of air into the indoor space. Namely, a stack effect which are generated by the difference between the external temperature and the internal temperature, a building airtightness and the length of the duct which is connected the ventilator or the like may be factors that precludes supplying the constant amount of air. For example, even if the center duct is satisfied with the condition for supplying constant air volume by the control of the blowing unit 15, the amount of air supplied into each home may be not uniform by the change of indoor circumstance. The stack effect is the biggest factor among them to affect the supply of constant air volume.

As can be understood by the skilled man in the art, the stack effect is brought about by the difference of the air density between the inside and the outside of a building. For example, since the inside of the builing is warmer than the outside of the building in winter, the pressure inside the building is relatively lower than that out side the building. Therefore, the air outside the building is introduced into the inside of the building, thus the introduced external air vertically goes up to be dischcharged outside of the building. At this time, the internal air of the building is introduced into the external air supplying passage of the ventilation system, especially the ventilaotr, thus precudes the outside to be introduced into the inside of the building. Then, the load of the air supply blowing unit 26 is increased, whereas the load of the air exhaust blowing unit 27 is decreased. In summer, the circumstance appose to that in winter will happen.

For such a reason, it is required to uphold the supply of constant air volume responding to the change of the indoor circumstance. Hereinafter, it will be descirbed about how to maintain the supply of constant air volume with respect to the change of the indoor circumstance.

As the load of the air supply blowing unit 26 is increased, the phase cuurent applied to a fan motor of the air supply blowing unit 26 is changed. For an instance, in winter, the load of the air supply blowing unit 26 is increased by the stack effect, thus the phase current applided to the fan motor is increased. It means decreasing of the amount of air supplied to the inside of the building, specifically to the inside of the home by the air supply blowing unit 26 that the phase current applied to the fan motor of the air supply blowing unit is increased. At this moment, the controller of the ventilator 20 is configured to detect the change of the phase current supplied to the fan motor of the air supply blowing unit 26, and control the inverter of the fan motor such that the amount of the current supplied to the fan motor become increased. More specifically, the controller is provided with memory including a table with regard to the RPM variation and the current supply variation corresponding to the change of the phase current. Therefore, the controller, on the basis of the table, evaluates the change of the RPM of the fan motor according to the change of the phase current detected by a detecting element(not shown) and evaluates the amount of the current to be supplied to the fan motor based on the evaluated change of the RPM. Then, the controller controls such that the fan of the air supply blowing unit 26 rotates in accordance with the RPM calculated through the process described above. Namely, by controlling the inverter of the fan motor such that the fan of the air supply blowing uint 26 rotates to the calcurated RPM, the amount of the current supplied to the fan motor is increased. Then, the air volume supplied to the inside of the home can be maintained constant, even if the indoor circumstance is changed.

The indoor and outdoor circumstances should be considered together, in order to maintain the air volume supplied to the inside of the home constant. In other words, the change of the phase current to the fan motor according to the change of the indoor circumstance and the change of the pressure inside the center duct according to the change of the outdoor circumsatnce should be considered together. By setting up the RPM of the fan motor according to the change of the indoor circumstance to fit the constant air volume condition and setting up the pressure inside the center duct to fit the constant air volume condition, it can be achieved that the air is stably supplied to the inside of the home regardless of the height of the building.

A ventilation system according to an embodiment not falling under the scope of the present invention is described hereafter with reference to the accompanying drawings. However, since this embodiment has differences in connection between a center duct and a ventilator and the function of the center duct as compared with the embodiment of the invention, the differences are mainly described and the same components are designated by the same reference numerals as in the description of the embodiment of the invention.

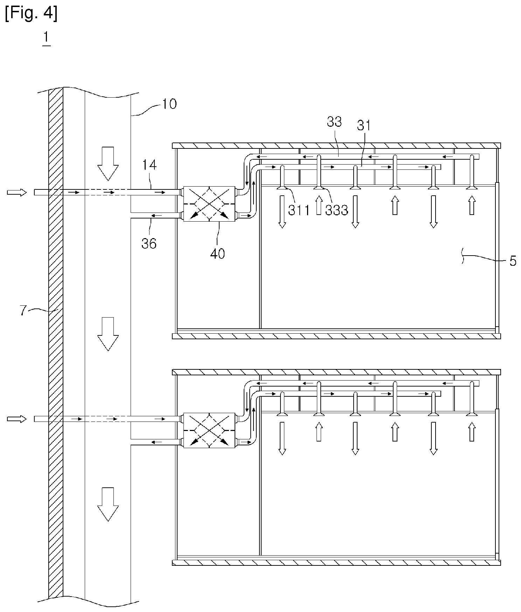

FIG. 4 is a view illustrating the schematic configuration of a ventilation system according to an embodiment not falling under the scope of the present invention.

Referring to FIG. 4, a ventilator 40 of the ventilation system according to the second embodiment of the present invention includes an supply duct 14 that is connected to the ventilator 40 and directly sucks the external air and an exhaust duct 36 that connects a ventilator 40 with a center duct 10.

That is, the external air outside a building 1 flows into the ventilator 40 through the supply duct 14. Further, the external air that has flowed inside exchanges heat with the internal air discharged from a home 5 and then is guided into the home 5 through the discharge duct 31.

Further, the air inside the home 5 flows into the ventilator 40 through an intake duct 33 and exchanges heat with the external air, and then is guided into the center duct 10 through the exhaust duct 36.

In this process, the fan 151 of the blowing unit 15 can be controlled to rotate opposite to the first embodiment. That is, the blowing unit 15 can function as an exhaust unit that discharges the air inside the center duct to the outside. In other words, the internal air guided into the center duct 10 can be discharged outside the building 1 through the blowing unit 15.

According to another embodiment, there may be provided a center duct connected with the supply duct 14 and another center duct connected to the exhaust duct 36. In this configuration, the outside environment that influences the ventilator 20 provided for the home 5 is minimized, thereby considerably increasing effect of the present invention.

## Claims

1. A ventilation system comprising:
one or more ventilators (20) which are provided for each floor within a building;
a supply duct (13) connected to the ventilator to introduce external air;
an exhaust duct (35) connected to the ventilator to exhaust internal air;
a center duct (10) which is provided in the building and longitudinally extends through a plurality of floors; and
a blowing unit (15) that is provided at one side of the center duct and forcibly blows the air in the center duct,
wherein the supply duct (13) is connected to the center duct (10) and the exhaust duct (35) extends outside the building through the outer wall of the building,
**characterized in that** one side of the exhaust duct (35) is exposed to the outside of the building through the outer wall and an end of said one side is covered by an exhaust cap (355),
wherein the exhaust cap (355) allows the internal air to flow outside while preventing foreign substances from flowing inside,
wherein the center duct (10) is provided with at least one pressure sensor (17), and the blowing unit (15) is configured to adjust the amount of air flowing inside the center duct on the basis of the value measured by the pressure sensor.

2. The ventilation system according to claim 1, wherein the pressure sensor (17) is disposed in an upper end portion of the center duct.

3. The ventilation system according to claim 2, wherein the blowing unit (15) is disposed at a lower end portion of the center duct.

4. The ventilation system according to claim 1, further comprising:
a heat exchange element (25) provided inside the ventilator, external air and internal air exchange heat with each other therethrough;
a discharge duct (31) connected to the ventilator, which guide the external air into indoor;
a suction duct (33) connected to the ventilator, which guide the internal air into the ventilator.

5. The ventilation system according to claim 1, wherein a plurality of homes exists on each floor and the plurality of the ventilators (20) are respectively provided for the homes.

6. The ventilation system according to claim 1, wherein the center duct (10) extends from the lowermost end to the uppermost end of the building.

7. The ventilation system according to claim 1, wherein the supply duct (13) is connected to the center duct (10) and the blowing unit (15) sucks the air outside the building and supplies the air into the center duct.

8. The ventilation system according to claim 1, the exhaust duct (35) is connected to the center duct (10) and the blowing unit (15) discharges the air inside the center duct to the outside of the building.

9. The ventilation system according to claim 5, further comprising:
an air supply blowing unit (26) disposed in the ventilator, for blowing the external air into each home of the building; and
an air exhaust blowing unit (27) disposed in the ventilator, for blowing the internal air in each home out to the outside of the building.

10. The ventilation system according to claim 9, further comprising:
a controller provided with a memory including a table with regard to a RPM variation and a current supply variation corresponding to a change of a phase current,
wherein the controller is configured to increase or decrease RPM of a fan of the air supply blowing unit (26) of each ventilator (20),
wherein the controller is configured: to evaluate the change of RPM of a fan motor of the air supply blowing unit (26) according to the detected change of the phase current on the basis of the table; to, then, evaluate the amount of current to be supplied to the fan motor based on the evaluated change of the RPM of the fan motor; and, based thereon, to control such that the fan of the air supply blowing unit (26) rotates in accordance with the RPM calculated.

## Patentansprüche

1. Belüftungssystem, das aufweist:
einen oder mehrere Ventilatoren (20), die für jedes Stockwerk innerhalb eines Gebäudes bereitgestellt sind;
einen Zuführungskanal (13), der mit dem Ventilator verbunden ist, um Außenluft einzuleiten;
einen Abluftkanal (35), der mit dem Ventilator verbunden ist, um Innenluft abzuleiten;
einen Zentralkanal (10), der in dem Gebäude bereitgestellt ist und sich längs durch mehrere Stockwerke erstreckt; und
eine Gebläseeinheit (15), die auf einer Seite des Zentralkanals bereitgestellt ist und die Luft in dem Zentralkanal zwangsweise bläst,
wobei der Zuführungskanal (13) mit dem Zentralkanal (10) verbunden ist und der Abluftkanal (35) sich durch die Außenwand des Gebäudes nach außerhalb des Gebäudes erstreckt,
**dadurch gekennzeichnet, dass**
eine Seite des Abluftkanals (35) durch die Außenwand nach außerhalb des Gebäudes freiliegt und ein Ende der einen Seite von einer Abluftkappe (355) bedeckt ist,
wobei die Abluftkappe (355) zulässt, dass die Innenluft nach außen strömt, während sie verhindert, dass Fremdstoffe nach innen strömen,
wobei der Zentralkanal (10) mit wenigstens einem Drucksensor (17) versehen ist und die Gebläseeinheit (15) konfiguriert ist, um die Luftmenge, die im Inneren des Zentralkanals strömt, auf der Basis des von dem Drucksensor gemessenen Werts einzustellen.

2. Lüftungssystem nach Anspruch 1, wobei der Drucksensor (17) in einem oberen Endabschnitt des Zentralkanals angeordnet ist.

3. Lüftungssystem nach Anspruch 2, wobei die Gebläseeinheit (15) an einem unteren Endabschnitt des Zentralkanals angeordnet ist.

4. Lüftungssystem nach Anspruch 1, das ferner aufweist:
ein Wärmetauscherelement (25), das im Inneren des Ventilators bereitgestellt ist, durch welches Außenluft und Innenluft Wärme miteinander austauschen;
einen Abführungskanal (31), der mit dem Ventilator verbunden ist, der die Außenluft ins Innere leitet;
einen Saugkanal (33), der mit dem Ventilator verbunden ist, der die Innenluft in den Ventilator leitet.

5. Lüftungssystem nach Anspruch 1, wobei auf jedem Stockwerk mehrere Haushalte vorhanden sind und die mehreren Ventilatoren (20) jeweils für die Haushalte bereitgestellt sind.

6. Lüftungssystem nach Anspruch 1, wobei der Zentralkanal (10) sich von dem untersten Ende zu dem obersten Ende des Gebäudes erstreckt.

7. Lüftungssystem nach Anspruch 1, wobei der Zuführungskanal (13) mit dem Zentralkanal (10) verbunden ist und die Gebläseeinheit (15) die Luft außerhalb des Gebäudes einsaugt und die Luft in den Zentralkanal zuführt.

8. Lüftungssystem nach Anspruch 1, wobei der Abluftkanal (35) mit dem Zentralkanal (10) verbunden ist und die Gebläseeinheit (15) die Luft im Inneren des Zentralkanals nach außerhalb des Gebäudes abführt.

9. Lüftungssystem nach Anspruch 5, das ferner aufweist:
eine Luftzuführungsblaseinheit (26), die in dem Ventilator angeordnet ist, um die Außenluft in jeden Haushalt des Gebäudes zu blasen; und
eine Luftabführungsblaseinheit (27), die in dem Ventilator angeordnet ist, um die Innenluft in jedem Haushalt nach außerhalb des Gebäudes zu blasen.

10. Lüftungssystem nach Anspruch 9, das ferner aufweist:
eine Steuerung, die mit einem Speicher versehen ist, der eine Tabelle in Bezug auf eine Drehzahländerung und eine Änderung der Stromzufuhr entsprechend einer Änderung eines Phasenstroms enthält,
wobei die Steuerung konfiguriert ist, um die Drehzahl eines Ventilators der Luftzuführungsblaseinheit (26) jedes Ventilators (20) zu erhöhen oder zu verringern,
wobei die Steuerung konfiguriert ist, um: die Änderung der Drehzahl eines Ventilatormotors der Luftzuführungsblaseinheit (26) gemäß der erfassten Änderung des Phasenstroms auf der Basis der Tabelle auszuwerten, um dann die Strommenge, die an den Ventilatormotor zugeführt werden soll, basierend auf der Auswertung der Änderung der Drehzahl des Ventilatormotors auszuwerten, und basierend darauf derart zu steuern, dass der Ventilator der Luftzuführungsblaseinheit (26) sich entsprechend der berechneten Drehzahl dreht.

## Revendications

1. Système de ventilation comprenant :
un ou plusieurs ventilateurs (20) qui sont prévus pour chaque étage à l'intérieur d'un bâtiment ;
une conduite d'alimentation (13) raccordée au ventilateur pour introduire de l'air externe ;
une conduite d'évacuation (35) raccordée au ventilateur pour évacuer de l'air interne ;
une conduite centrale (10) qui est prévue dans le bâtiment et s'étend longitudinalement à travers une pluralité d'étages ; et
une unité de soufflage (15) qui est prévue sur un côté de la conduite centrale et souffle de manière forcée l'air dans la conduite centrale,
dans lequel la conduite d'alimentation (13) est raccordée à la conduite centrale (10) et la conduite d'évacuation (35) s'étend à l'extérieur du bâtiment à travers la paroi externe du bâtiment,
**caractérisé en ce que**
un côté de la conduite d'évacuation (35) est exposé à l'extérieur du bâtiment à travers la paroi externe et une extrémité dudit un côté est couverte par un bouchon d'évacuation (355),
dans lequel le bouchon d'évacuation (355) permet à l'air interne de s'écouler à l'extérieur tout en empêchant des substances étrangères de s'écouler à l'intérieur,
dans lequel la conduite centrale (10) est dotée d'au moins un capteur de pression (17), et l'unité de soufflage (15) est configurée pour réguler la quantité d'air s'écoulant à l'intérieur de la conduite centrale sur la base de la valeur mesurée par le capteur de pression.

2. Système de ventilation selon la revendication 1, dans lequel le capteur de pression (17) est disposé dans une partie d'extrémité supérieure de la conduite centrale.

3. Système de ventilation selon la revendication 2, dans lequel l'unité de soufflage (15) est disposée au niveau d'une partie d'extrémité inférieure de la conduite centrale.

4. Système de ventilation selon la revendication 1, comprenant en outre :
un élément d'échange de chaleur (25) prévu à l'intérieur du ventilateur, l'air externe et l'air interne échangent de la chaleur l'un avec l'autre à travers celui-ci ;
une conduite de décharge (31) raccordée au ventilateur, qui guide l'air externe à l'intérieur ;
une conduite d'aspiration (33) raccordée au ventilateur, qui guide l'air interne dans le ventilateur.

5. Système de ventilation selon la revendication 1, dans lequel une pluralité de logements existe à chaque étage et la pluralité des ventilateurs (20) sont prévus respectivement pour les logements.

6. Système de ventilation selon la revendication 1, dans lequel la conduite centrale (10) s'étend de l'extrémité la plus basse à l'extrémité la plus haute du bâtiment.

7. Système de ventilation selon la revendication 1, dans lequel la conduite d'alimentation (13) est raccordée à la conduite centrale (10) et l'unité de soufflage (15) aspire l'air à l'extérieur du bâtiment et fournit l'air dans la conduite centrale.

8. Système de ventilation selon la revendication 1, dans lequel la conduite d'évacuation (35) est raccordée à la conduite centrale (10) et l'unité de soufflage (15) décharge l'air à l'intérieur de la conduite centrale vers l'extérieur du bâtiment.

9. Système de ventilation selon la revendication 5, comprenant en outre :
une unité de soufflage d'alimentation en air (26) disposée dans le ventilateur, pour souffler l'air externe dans chaque logement du bâtiment ; et
une unité de soufflage d'évacuation d'air (27) disposée dans le ventilateur, pour souffler l'air interne de chaque logement vers l'extérieur du bâtiment.

10. Système de ventilation selon la revendication 9, comprenant en outre :
un dispositif de commande doté d'une mémoire incluant un tableau concernant une variation de trs/min et une variation d'alimentation en courant correspondant à un changement d'un courant de phase,
dans lequel le dispositif de commande est configuré pour augmenter ou diminuer les trs/min d'une soufflante de l'unité de soufflage d'alimentation en air (26) de chaque ventilateur (20),
dans lequel le dispositif de commande est configuré : pour évaluer le changement de trs/min d'un moteur de soufflante de l'unité de soufflage d'alimentation en air (26) en fonction du changement détecté du courant de phase sur la base du tableau ; pour évaluer ensuite la quantité de courant à fournir au moteur de soufflante sur la base du changement évalué de trs/min du moteur de soufflante ; et, sur la base de celle-ci, pour commander de telle sorte que la soufflante de l'unité de soufflage d'alimentation en air (26) tourne en fonction des trs/min calculés.
